# EUROPÄISCHE PATENTSCHRIFT

(11) **EP 0 761 275 B1**
(45) Veröffentlichungstag und Bekanntmachung des Hinweises auf die Patenterteilung: **09.10.2002**
(21) Anmeldenummer: 96112273.6
(22) Anmeldetag: 30.07.1996
(51) Int. Cl.: B01D 17/04, C02F 1/54

(54) **Verbessertes Verfahren zur Spaltung von Ölemulsionen**
Process for separating oil emulsions
Procédé pour la séparation d'émulsions d'huile

(30) Priorität: 11.08.1995 DE 19529602
(43) Veröffentlichungstag der Anmeldung: 12.03.1997
(73) Patentinhaber: BAYER AG, 51368 Leverkusen (DE)
(72) Erfinder: Lehmann, Bernhard, 52072 Aachen (DE); Litzinger, Ulrich, 57627 Hachenburg (DE)

(56) Entgegenhaltungen:
- EP-A- 0 186 029
- EP-A- 0 448 821
- US-A- 4 434 850
- US-A- 5 128 046

## Beschreibung

Die vorliegende Erfindung betrifft ein verbessertes Verfahren zur Spaltung von Ölemulsionen, insbesondere von Wasser-in-Öl-Emulsionen unter Einsatz neuartiger Emulsionsspalter.

Die Behandlung ölhaltiger, insbesondere mineralölhaltiger Abwässer ist zum Schutz der Gewässer und der Umwelt dringend erforderlich und in vielen Ländern durch einschlägige wasserrechtliche Bestimmungen festgelegt. Ölemulsionen sind für Fische giftig, auch wenn die Öle in nicht-emulgiertem Zustand ungiftig sind. Ähnliche Wirkungen treten auch bei niedrigen Wasserorganismen auf. Aufgrund aktueller Umweltschutzbestimmungen ist es erforderlich, nicht nur das Öl aus dem Abwasser zu entfernen, sondern es in einer für eine weitere Verwendung geeigneten Qualität zu erhalten.

Die Verbesserung von Verfahren zur Spaltung von Ölemulsionen ist daher eine fortwährende Aufgabe. Das Trennen von Ölemulsionen, z.B. von solchen wie sie in der metallverarbeitenden Industrie bei der Verwendung von Kühlschmieremulsionen und Oberflächenreinigern auftreten, erfolgt häufig durch Zugabe von kationischen Polymeren. Diese Spalter haben die Aufgabe, bei möglichst geringer Anwendungskonzentration die Emulsion zu brechen. Das Qualitätskriterium für derartige Spalter ist die Konzentration, in der sie angewendet werden müssen, um eine möglichst vollständige Spaltung in eine ölarme Wasserphase und eine wasserarme Ölphase zu erzielen. Bekannte derartige Spalter sind z.B. Homopolymere von Diallyldimethylammoniumchlorid (=Poly-DADMAC) (siehe z.B. US-PS 2 923 701, US-PS 3 461 163 und EP-PS 0 186 029).

Ein Nachteil von Poly-DADMAC-Spaltern ist ihre hohe Spezifität, d.h., ein gegebener Spalter ist nur für ein spezifisches Abwasser im Hinblick auf die gewünschte Trennwirkung optimal und führt bei der üblicherweise stark schwankenden qualitativen und quantitativen Zusammensetzung von Ölemulsionen zu Problemen. Ein weiterer Nachteil ist, daß die freigesetzte und aufrahmende Ölphase bedingt durch solche Spalter eine Strukturviskosität und schlechte Fließeigenschaften aufweist. Poly-DADMAC-Spalter sind deshlab nur für einen Teilbereich der möglichen Anwendungen ausreichend geeignet.

Auch Polyamine und deren Derivate sind als Spalter für Ölemulsionen bekannt (siehe DE-OS 2 351 754 und DE-OS 2 833 654). Nachteilig bei Polyamin-Spaltern ist die große Menge, in der sie angewendet werden müssen, um befriedigende Ergebnisse zu erhalten. Aus US-A 5 372 723 ist ferner bereits ein Verfahren zur Spaltung von Wasser-in-Öl-Emulsionen bekannt, das zwei Spaltschritte umfasst, bei denen Poly-DADMAC bzw. Polyalkylenpolyamine als Spaltmittel eingesetzt werden können.

Es wurde nun ein Verfahren zur Spaltung von Ölemulsionen gefunden, das dadurch gezeichnet ist, daß man als Spalter Gemische einsetzt, die Poly-DADMAC und Polyalkylenpolyamin enthalten, wobei das Poly-DADMAC als 35 Gew.-%ige Lösung in Wasser eine Viskosität von 2000 bis 20000 mPa.s bei 25°C und das Polyalkylenpolyamin als 25 Gew.-%ige Lösung in Wasser eine Viskosität von 200 bis 800 mPa.s (bei 25°C) aufweist, die relativen Mengen Poly-DADMAC : Polyalkylenpolyamin 25 bis 75 : 75 bis 25 Gew.-% betragen und der Spalter zu 95 bis 100 Gew.-% aus diesen beiden Komponenten besteht.

Auf die erfindungsgemäße Weise kann man beliebige ölhaltige Emulsionen spalten. Beispielsweise kann man erfindungsgemäß Wasser-in-Öl-Emulsionen spalten, insbesondere Kühl-Schmiermittel-Emulsionen, Walzöl-Emulsionen, Rohöl/Wasser-Emulsionen, Emulsionen wie sie z.B. als Waschlaugen, Entfettungsbäder, in Lackierereiabwässern, ölhaltigen Kondensaten, Tankreinigungsabwässern, Bilgenwässern und Slop-Ölen anfallen, sowie Emulsionen, wie sie bei der Verarbeitung tierischer und pflanzlicher Produkte anfallen. Für das erfindungsgemäße Verfahren ist es im allgemeinen vorteilhaft, evtl. vorhandene feste Bestandteile aus der spaltenden Emulsion abzutrennen, beispielsweise Metallpartikel.

Geeignetes Poly-DADMAC kann man auf bekannte Weise durch Polymerisation von Diallyldimethylammoniumchlorid in wäßriger Phase in Gegenwart von Radikalstartern bei erhöhter Temperatur herstellen (siehe z.B. US-PS 3 288 770). Das Poly-DADMAC kann gegebenfalls noch monomeres Diallyldimethylammoniumchlorid enthalten, beispielsweise bezogen auf die Summe von polymerisiertem und monomerem DADMAC 0 bis 10 Gew.-%. Das Poly-DADMAC kann so wie es bei der Herstellung anfällt eingesetzt werden, d.h. als Lösung in Wasser.

Erfindungsgemäß einzusetzendes Poly-DADMAC kann beispielsweise ein Molekulargewicht von 40 000 bis 110 000, vorzugsweise 70 000 bis 80 000 aufweisen. Vorzugsweise wird ein Poly-DADMAC verwendet, das als 35 Gew.-%ige Lösung in Wasser eine Viskosität von 3 000 bis 5 000 mPa.s aufweist (bei 25°C).

Geeignete Polyalkylenpolyamine kann man beispielsweise herstellen, in dem man zunächst Ammoniak mit Dichloralkylenen und die dabei erhältlichen Produkte, z.B. Diethylentriamin, mit weiteren Dichloralkylen umsetzt. Auch Gemische von Polyalkylenpolyaminen verschiedener Herkunft können eingesetzt werden. Die primär so zugänglichen Polyalkylenamine können gegebenenfalls zur Verminderung von Vinylchlorid-Anteilen auf weniger als die Nachweisgrenze in wäßriger Lösung bei vermindertem Druck erhitzt und/oder gegebenenfalls zur Viskositätserniedrigung bei erhöhtem Druck thermisch abgebaut werden (siehe z.B. DE-OS 2 351 754 und DE-OS 2 833 654). Auch Polyalkylenpolyamine kann man so wie sie bei der Herstellung anfallen einsetzen, d.h. als Lösung in Wasser.

Bevorzugt gelangen Polyethylenpolyamine zum Einsatz, die ein Molekulargewicht von 80 000 bis 120 000, eine Viskosität von 250 bis 400 mPa.s (gemessen in 25 Gew.-%iger wäßriger Lösung bei 25°C) und eine möglichst geringe Wassergefährdung aufweisen.

Vorzugsweise liegen die relativen Mengen der beiden Komponenten bei 30 bis 40 Gew.-% Poly-DADMAC und 70 bis 60 Gew.-% Polyalkylenpolyamin.

Häufig ist es von Vorteil, den erfindungsgemäß zu verwendenden Emulsionsspalter durch Zusatz einer Säure zu stabilisieren. Bevorzugt sind hierfür einwertige Mineralsäuren, insbesondere Salzsäure, z.B. solche einer Konzentration von 20 bis 39 Gew.-%. Die Menge des Säurezusatzes (gerechnet ohne Wasser) kann z.B. bis zu 5 Gew.-% des einzusetzenden Emulsionsspalters betragen.

Die erfindungsgemäß zu verwendenden Spalter werden im allgemeinen in wäßriger Lösung eingesetzt. Solche Lösungen können z.B. 5 bis 60 Gew.-% des Spalters enthalten. Vorzugsweise enthalten sie 20 bis 50 Gew.-% des Spalters. Der Spalter wird dabei als Summe der wasserfreien Komponenten gerechnet. Solche Lösungen sind homogen, viskos und in jedem Verhältnis mit Wasser mischbar.

Die in Bezug auf die zu spaltende Ölemulsion optimale Spaltermenge kann durch einen routinemäßigen Reihenversuch auf einfache Weise ermittelt werden. Sie liegt im allgemeinen bei 0,01 bis 0,2 Gew.-%, häufig bei 0,015 bis 0,1 Gew.-% Spalter (ohne Wasseranteile).

Die Spaltung von Ölemulsionen mit erfindungsgemäß einzusetzenden Spaltern kann bei unterschiedlichen Temperaturen vorgenommen werden, beispielsweise bei 0 bis 80°C. Bevorzugt sind Temperaturen von 10 bis 30°C.

Die für die Spaltung von Ölemulsionen auf die erfindungsgemäße Weise benötigte Zeit hängt nicht nur vom jeweils eingesetzten Spalter und der spezifischen Stabilität der zu spaltenden Ölemulsion ab, sondern auch von einer Reihe anderer Parameter, z.B. der Konzentration des Spalters, der Temperatur und der Geometrie des Behälters, in dem die Spaltung durchgeführt wird. Je nach den vorliegenden Verhältnissen ist mit z.B. 10 Minuten bis 10 Stunden als Dauer einer erfindungsgemäßen Spaltung zu rechnen.

Mit den nach Durchführung des erfindungsgemäßen Verfahrens vorliegenden beiden Phasen kann man z.B. wie folgt verfahren: Die Wasserphase kann im allgemeinen nach der Behandlung mit einem oder mehreren weiteren Spaltern zur Entfernung letzter Ölanteile (siehe z.B. DE-OS 4 009 760) dem Vorfluter zugeführt werden. Die Ölphase kann im allgemeinen der thermischen Nutzung (Verbrennung) oder nach weiteren Behandlungsschritten (z.B. Sekundärspaltung, Zentrifugierung, Desorption, Raffination) auch einer stofflichen Nutzung zugeführt werden.

Die erfindungsgemäß einzusetzenden Spalter haben den Vorteil, daß sie über einen breiten Konzentrationsbereich wirksam sind. Das hat auch zur Folge, daß mit ihnen ohne besonderen Aufwand Ölemulsionen wechselnder Zusammensetzung gespalten werden können.

Bei den üblichen Aufbereitungstemperaturen wird im allgemeinen bereits nach kurzer Einwirkungszeit eine weitgehende Separation erreicht mit einer scharfen Trennung zwischen Öl- und Wasserphase, wobei das abgetrennte Wasser weitgehend frei von Öl ist und das abgetrennte Öl weitgehend frei von Wasser ist. Die abgetrennte Ölphase weist eine niedrige Viskosität und ein gutes Fließverhalten auf.

### Beispiele

Sämtliche Viskositätsmessungen erfolgten mit einem Haake Rotovisko RV 12 mit dem Maßkopf M 150 bei 20°C

### Herstellung:

### Beispiel 1

50 g Polyalkylenpolyamin, das gemäß Beispiel 1 der DE-OS 2 833 654 erhalten worden war, wurden mit konzentrierter technischer Salzsäure von einem pH-Wert von 8,2 auf einen pH-Wert von 6,0 gebracht. Dabei trat eine Erwärmung von 22°C aud 35°C ein. Danach wurden 50 g Poly-DADMAC (Floerger FL 45 CLV der Firma SNF) eingerührt.

### Beispiel 2

50 g des in Beispiel 1 verwendeten Polyalkylenpolyamins wurden mit 50 g des in Beispiel 1 verwendeten Poly-DADMAC's gemischt. Diese Mischung wurde mit konzentrierter technischer Salzsäure von einem pH-Wert von 8,5 auf einen pH-Wert von 6,0 gebracht. Das Gemisch erwärmte sich dabei von 22°C auf 32°C.

### Anwendung:

Emulsionsspaltungen wurden mit 4 verschiedenen Kühlschmieremulsionen aus der Automobilindustrie vorgenommen. Einzelheiten sind aus der nachfolgenden Tabelle ersichtlich.

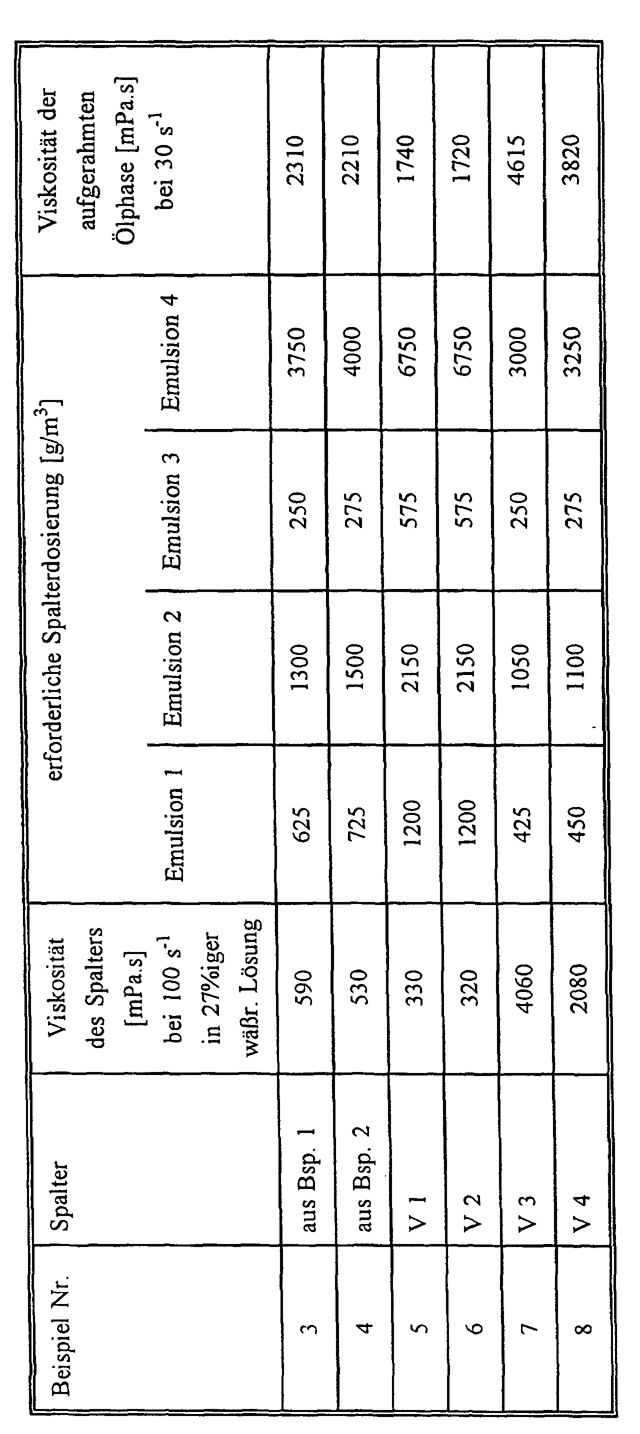

Die Beispiele 5 bis 8 dienen zum Vergleich. Die eingesetzten Spalter waren: V 1 = Polyalkylenpolyamin wie in Beispiel 1 verwendet, V 2 = V 1 mit Salzsäure auf pH 6 eingestellt, V 3 = Poly-DADMAC HOE S 3954 der Fa. Hoechst und V 4 = Poly-DADMAC wie in Beispiel 1 verwendet.

Man ersieht aus den Beispielen 3 bis 8, daß erfindungsgemäß gegenüber V 1 und V 2 weniger Spalter erforderlich ist, wobei die Viskosität der aufrahmenden Ölphase nur mäßig steigt und, daß bei V 3 und V 4 schon hochviskose Spalterlösungen eingesetzt werden müssen, etwas weniger Spalter benötigt wird als erfindungsgemäß, vor allem aber eines sehr hochviskose; nur schwierig handhabbare Ölphase aufrahmt.

Es ist außerdem überraschend, daß von erfindungsgemäß einzusetzenden Spaltern weniger gebraucht wird als der Summe der einzelnen Komponenten entspricht. Wenn man berücksichtigt, daß die in den Beispielen 3 und 4 eingesetzten erfindungsgemäßen Spalter jeweils 50:50 Gew.-Teile Polyalkylenpolyamin und Poly-DADMAC enthalten, so war zu erwarten, daß 50 % der von V 1 oder V 2 benötigten Menge (siehe Beispiele 5 und 6) plus 50 % der von V 4 benötigten Menge (siehe Beispiel 8) die von den erfindungsgemäßen Spaltern benötigte Menge ergibt. Tatsächlich sehen die Verhältnisse bei Emulsion 1 aber so aus: Von V 1 oder V 2 werden 1200 g/m³, von V 4 450 g/m³ benötigt. Das ergibt für die in den Beispielen 3 und 4 eingesetzten erfindungsgemäßen Spalter eine theoretische Dosierung von 600 + 225 = 825 g/m³. Tatsächlich werden jedoch nur 625 bzw. 725 g/m³ gebraucht, also deutlich über 10 % weniger als erwartet. Bei den anderen Emulsionen sind die Verhältnisse ähnlich, nämlich bei der Emulsion 2 eine theoretische Dosierung von 1075 + 550 = 1625 g/m³ und ein tatsächlicher Bedarf von 1300 bzw. 1500 g/m³, bei Emulsion 3 eine theoretische Dosierung von 287,5 + 137,5 = 425 g/m³ und ein tatsächlicher Bedarf von 250 bzw. 275 g/m³ und bei Emulsion 4 eine theoretische Dosierung von 3375 + 1625 = 5000 g/m³ und ein tatsächlicher Bedarf von 3750 bzw. 4000 g/m³.

## Patentansprüche

1. Verfahren zur Spaltung von Ölemulsionen, **dadurch gekennzeichnet, daß** man als Spalter Gemische einsetzt, die Poly-DADMAC und Polyalkylenpolyamin enthalten, wobei das Poly-DADMAC als 35 Gew.-%ige Lösung in Wasser eine Viskosität von 2000 bis 20000 mPa.s bei 25°C und, das Polyalkylenpolyamin als 25 Gew.-%ige Lösung in Wasser eine Viskosität von 200 bis 800 mPa.s (bei 25°C) aufweist, die relativen Mengen Poly-DADMAC : Polyalkylenpolyamin 25 bis 75 : 75 bis 25 Gew.-% betragen und der Spalter zu 95 bis 100 Gew.-% aus diesen beiden Komponenten besteht.

2. Verfahren nach Anspruch 1, **dadurch gekennzeichnet, daß** das Spalter-Gemisch bis zu 5 Gew.-% einer einwertigen Mineralsäure enthält.

3. Verfahren nach Anspruch 1 oder 2, **dadurch gekennzeichnet, daß** die relativen Mengen Poly-DADMAC : Polyalkylenpolyamin 30 bis 40 : 70 bis 60 Gew.-% betragen.

4. Verfahren nach einem oder mehreren der Ansprüche 1 bis 3, **dadurch gekennzeichnet, daß** man den Spalter als wäßrige Lösung einsetzt, die 5 bis 60 Gew.-% des Spalters (Summe der wasserfreien Komponenten) enthält.

5. Verfahren nach einem oder mehreren der Ansprüche 1 bis 4, **dadurch gekennzeichnet, daß** man bezogen auf die zu spaltende Emulsion 0,01 bis 0,2 Gew.-% Spalter (ohne Wasseranteile) einsetzt.

## Claims

1. Process for breaking oil emulsions, **characterized in that** mixtures which comprise poly-DADMAC and polyalkylenepolyamine are employed as breakers the poly-DADMAC, as a 35 % strength by weight solution in water, having a viscosity of 2000 to 20,000 mPa.s at 25°C, and the polyalkylenepolyamine, as a 25 % strength by weight solution in water, having a viscosity of 200 to 800 mPa.s (at 25°C), the relative amounts of poly-DADMAC : polyalkylenepolyamine are 25 to 75 : 75 to 25 % by weight and the breaker comprises these two components to the extent of 95 to 100 % by weight.

2. Process according to Claim 1, **characterized in that** the breaker mixture comprises up to 5 % by weight of a monobasic mineral acid.

3. Process according to Claim 1 or 2, **characterized in that** the relative amounts of poly-DADMAC : polyalkylenepolyamine are 30 to 40 : 70 to 60 % by weight.

4. Process according to one or more of Claims 1 to 3, **characterized in that** the breaker is employed as an aqueous solution which comprises 5 to 60 % by weight of the breaker (sum of the anhydrous components).

5. Process according to one or more of Claims 1 to 4, **characterized in that** 0.01 to 0.2 % by weight of breaker (without water contents), based on the emulsion to be broken, is employed.

## Revendications

1. Procédé de rupture d'émulsions à base d'huile, **caractérisé en ce qu'**on utilise comme agents désémulsionnants des mélanges qui contiennent un poly-DADMAC et une polyalkylènepolyamine, dont le poly-DADMAC sous forme de solution à 35% en poids dans l'eau présente une viscosité de 2000 à 20000 mPa.s à 25°C et la polyalkylènepolyamine sous forme de solution à 25% en poids dans l'eau présente une viscosité de 200 à 800 mPa.s (à 25°C), les quantités relatives de poly-DADMAC et de polyalkylènepolyamine sont dans un rapport des pourcentages en poids de (25 à 75) : (75 à 25) et l'agent désémulsionnant est constitué de ces deux composants en proportion de 95 à 100% en poids.

2. Procédé suivant la revendication 1, **caractérisé en ce que** le mélange formant l'agent désémulsionnant contient jusqu'à 5% en poids d'un acide minéral monovalent.

3. Procédé suivant la revendication 1 ou 2, **caractérisé en ce que** les quantités relatives de poly-DADMAC et de polyalkylènepolyamine sont dans un rapport des pourcentages en poids de (30 à 40) : (70 à 60).

4. Procédé suivant l'une des revendications 1 à 3, **caractérisé en ce qu'**on utilise l'agent désémulsionnant sous forme d'une solution aqueuse qui en contient 5 à 60% en poids (somme des composants à l'exclusion de l'eau).

5. Procédé suivant l'une des revendications 1 à 4, **caractérisé en ce qu'**on utilise, par rapport à l'émulsion à rompre, 0,01 à 0,2% en poids d'agent désémulsionnant (sans les proportions d'eau).
